# FASCICULE DE BREVET EUROPEEN

(11) **EP 3 391 561 B1**
(45) Date de publication et mention de la délivrance du brevet: **18.11.2020**
(21) Numéro de dépôt: 16815616.4
(22) Date de dépôt: 29.11.2016
(51) Int. Cl.: H04B 10/112, H04B 10/114, H04B 10/116

(54) **CONTRÔLE D'ACCÈS À UN SERVICE EN LIGNE VIA UN RÉSEAU LI-FI**
STEUERUNG DES ZUGANGS ZU EINEM ONLINE-DIENST ÜBER EIN LI-FI-NETZWERK
CONTROL OF ACCESS TO AN ON-LINE SERVICE VIA A LI-FI NETWORK

(30) Priorité: 15.12.2015 FR 1562355
(43) Date de publication de la demande: 24.10.2018
(73) Titulaire: ORANGE, 75015 Paris (FR)
(72) Inventeur: PERRUFEL, Micheline, 35740 Pace (FR); DUSSAUME, Philippe, 35460 Tremblay (FR); BOUCHET, Olivier, 35700 Rennes (FR); LEROUX, Sylvain, 75020 Paris (FR); HELAINE, Olivier, 91230 Montgeron (FR)
(86) Numéro de dépôt international: PCT/FR2016/053132
(87) Numéro de publication internationale: WO 2017/103371

(56) Documents cités:
- US-A1- 2008 281 515
- US-A1- 2009 310 971
- US-A1- 2012 008 959

## Description

La présente invention concerne le domaine des communications de données transmises par modulation de lumière produisant un faisceau lumineux (ou « Li-Fi » ci-après).

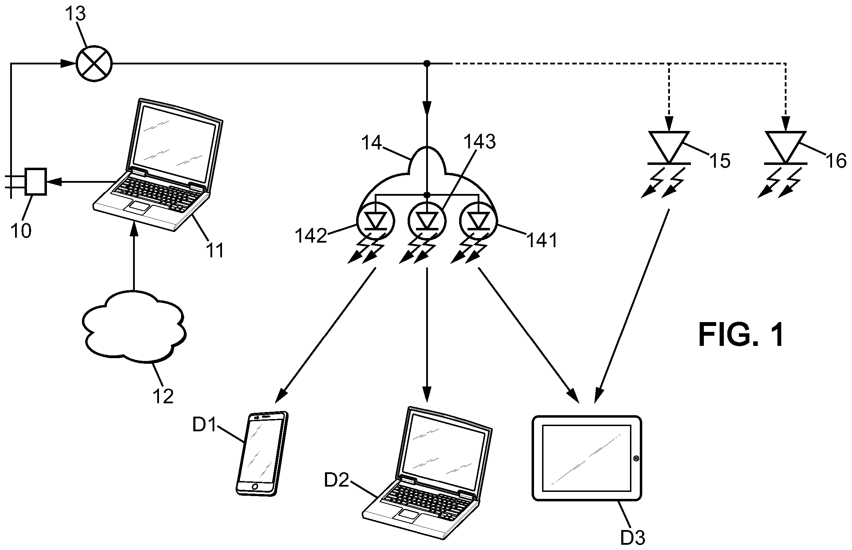

On a illustré sur la figure 1 un exemple d'application de ce type de communication. Un ordinateur 11 (ou un serveur, ou autres) est branché par exemple au réseau électrique par un boîtier 10 à courants porteurs en ligne (ou à un réseau Ethernet via un câble Ethernet). L'ordinateur 11 est aussi raccordé à un réseau étendu tel qu'Internet 12. L'ordinateur 11 peut ainsi se connecter à Internet pour un service particulier (présentation de pages web ou autres) et, sur réception de ces données de service, les envoyer vers le boîtier 10. L'ordinateur 11 indique en particulier l'adresse IP d'un dispositif 14 comportant une ou plusieurs lampes 141, 142, 143 de type LED (pour « light emitting diode ») et un routeur Li-Fi 13 connecté au boîtier 10 transmet ces données au dispositif de transmission 14. Par exemple, ces lampes émettent une lumière dans le visible, conformément à la norme IEEE 802.15.7® (2011).

Le dispositif 14 est équipé d'un encodeur numérique qui lui permet de transmettre les informations reçues et de les moduler (ou démoduler, notamment dans le cas où le dispositif 14 comporte des photorécepteurs pour recevoir des signaux lumineux issus des terminaux D1, D2, D3). Les impulsions électriques reçues entre le routeur 13 et le dispositif 14 sont alors transformées en impulsions lumineuses (ou vice versa). Dans l'exemple représenté sur la figure 1, le dispositif 14 comporte plusieurs lampes qui émettent simultanément un même faisceau lumineux en s'éteignant et en s'allumant à une très grande fréquence (au-delà de la persistance rétinienne). Pour décoder les données ainsi reçues, les terminaux D1, D2, D3, placés sous le faisceau lumineux, sont équipés d'un photo-détecteur couplé à un démodulateur numérique intégré.

Ainsi chacun des terminaux D1, D2, D3 (Smartphone, tablette, ou autres équipements) reçoit les mêmes données de l'ordinateur 11. Or, certains terminaux (D1, D2 par exemple) peuvent être abonnés à des services particuliers, et d'autres (D3) non. Il convient alors de distinguer les différents contenus susceptibles d'être communiqués à différents terminaux, par différentes lampes respectives.

Par ailleurs, pour recevoir ces données (ou plus généralement accéder simplement au réseau Internet sur requête), ces terminaux D1, D2, D3 doivent être situés dans la zone lumineuse couverte par les lampes. Il n'est pas prévu de possibilité de mobilité pour les utilisateurs de tels terminaux. Plus précisément, si un terminal D3 se déplace d'une zone couverte par le dispositif 14 à une zone couverte par le dispositif 15 de la figure 1, le terminal doit en principe exécuter à nouveau une procédure d'authentification (et ce systématiquement à chaque changement de dispositif de transmission au cours de son déplacement, de 15 vers 16, etc.).

La présente invention vient améliorer la situation.

Elle propose à cet effet un procédé de contrôle d'accès à un service en ligne, l'accès au service étant sollicité, via un réseau de communication, par un terminal adapté pour recevoir des données diffusées par une pluralité de dispositifs de transmission de données par modulation de lumière produisant un faisceau lumineux. En particulier :
- chaque dispositif de transmission est caractérisé par un identifiant unique,
- chaque dispositif de transmission appartient à un groupe de dispositifs.
Le procédé comporte alors les étapes suivantes mises en œuvre par un serveur relié aux dispositifs de transmission :
- sur réception d'une requête issue du terminal pour accéder au service via un deuxième dispositif de transmission identifié par un deuxième identifiant, vérifier si une précédente requête d'accès pour ce même terminal a été acceptée pour un premier dispositif de transmission identifié par un premier identifiant, et
- quand les premier et deuxième identifiants correspondent à des dispositifs d'un même groupe, traiter la requête d'accès.

Ainsi, dans le cas où il est souhaité d'envoyer par exemple un grand nombre de contenus distincts pour différents terminaux (avec, comme illustré sur la figure 1, une distinction entre par exemple des terminaux D1, D2 abonnés à un service, et d'autres terminaux D3 non abonnés), on a recours à plusieurs dispositifs de transmission 15, 16 ou à un adressage de chaque lampe en particulier. Par exemple, chaque lampe peut avoir éventuellement aussi un modem/routeur individuel (par exemple dans son socle physique). Dans ce qui suit, on considère indistinctement alors par « dispositif de transmission » un dispositif à une seule lampe ou à plusieurs lampes émettant les mêmes données.

Chaque dispositif de transmission a donc un identifiant propre (par exemple une adresse IP fixe). Par exemple, pour une transmission de données relatives à un service réservé à des terminaux abonnés, les données diffusées par certaines lampes peuvent être chiffrées et accompagnées de l'identifiant de chacune de ces lampes, et les données reçues par les terminaux abonnés D1, D2 peuvent être déchiffrées par une clé privée.

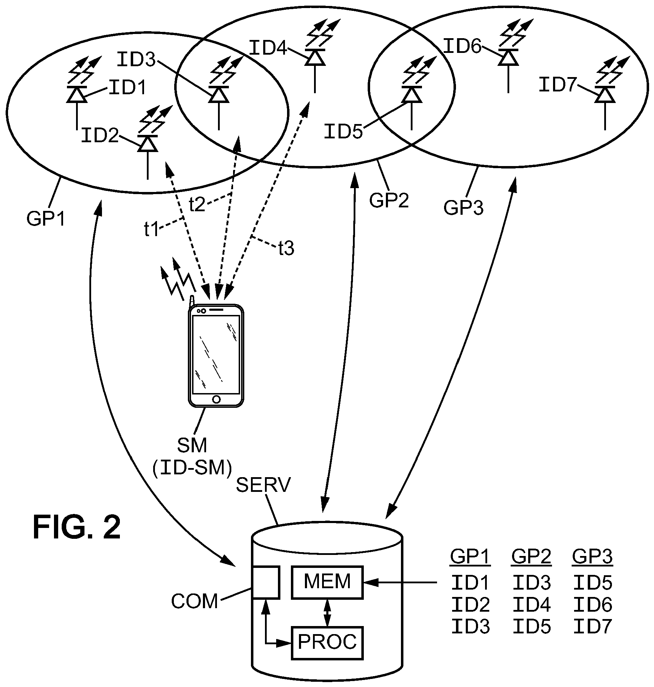

En particulier, chaque identifiant est répertorié dans un groupe (GP1, GP2, GP3, comme illustré sur la figure 2 commentée en détail plus loin). Une telle réalisation permet à la fois de :
- gérer des transmissions particulières (par exemple pour des terminaux abonnés) au sein d'un même groupe, restreint, de dispositifs, et
- assurer une continuité de transmission notamment dans le cas d'une situation de mobilité d'un terminal entre deux dispositifs d'un même groupe (ID2, ID3, puis ID4, comme illustré dans l'exemple de la figure 2).

Dans le cas inverse à celui exposé ci-dessus où les premier et deuxième identifiants ne correspondent pas à des dispositifs d'un même groupe, le procédé comporte en outre une étape de :
- déconnexion du terminal en réponse à la requête d'accès lorsque les premier et deuxième identifiants ne correspondent pas à des dispositifs d'un même groupe.
Ainsi, dans ce cas, par exemple, l'utilisateur du terminal doit s'authentifier à nouveau auprès du deuxième dispositif, pour accéder (ou non) au service (après vérification).

On connait des documents de l'art antérieur US-2012/008959, US-2009/310971, US-2008/281515, diverses formes de transfert (type « handover ») d'une communication en cours, de données par modulation de lumière, d'un dispositif de transmission du type ci-avant, à un autre, pour un terminal itinérant, afin d'assurer une continuité de service au terminal itinérant. Toutefois, aucun de ces documents ne propose de vérifier si une précédente requête d'accès pour ce même terminal a été acceptée pour un premier dispositif de transmission identifié par un premier identifiant, et aller jusqu'à déconnecter le terminal, en réponse à sa requête d'accès, lorsque les premier et deuxième identifiants ne correspondent pas à des dispositifs d'un même groupe.

Dans une réalisation, l'identifiant d'au moins un dispositif de transmission appartient à une pluralité de groupes à la fois.

Ainsi, dans cette réalisation, si chaque groupe est associé à une zone géographique prédéterminée, un dispositif de transmission dont l'identifiant appartient à deux groupes à la fois peut être capable d'assurer au terminal une continuité d'accès au service entre deux zones géographiques pendant une mobilité du terminal entres ces deux zones géographiques.

Dans une réalisation, chaque requête d'accès d'un terminal peut comporter un identifiant de ce terminal et un identifiant du dispositif de transmission via lequel l'accès au service est requis par ce terminal. Cette réalisation permet au serveur de retrouver si le terminal était déjà en communication avec un dispositif du même groupe. Par exemple, l'identifiant du terminal peut être transmis avec chaque requête d'accès au serveur, et stocké au moins temporairement dans une mémoire du serveur pour pouvoir vérifier ultérieurement si une précédente requête d'accès a été acceptée précédemment pour le terminal ayant ce même identifiant avec un dispositif du même groupe.

Dans une forme de réalisation où l'on tient compte en outre d'un délai de temporisation, la requête d'accès est traitée :
- quand les premier et deuxième identifiants correspondent à des dispositifs d'un même groupe,
- et si en outre la précédente requête d'accès a été acceptée pour le premier dispositif depuis un délai inférieur au délai de temporisation précité.

Dans une réalisation, la transmission des données vers le terminal au moins (et possiblement le trajet inverse des données) peut être protégée par chiffrement. Dans ce cas, on peut affecter par exemple une clé de chiffrement commune à des dispositifs de transmission d'un même groupe.

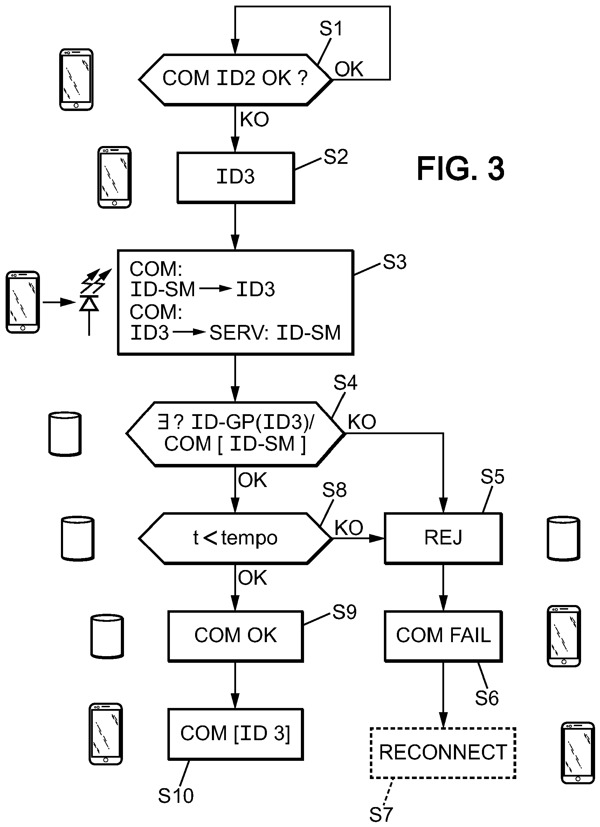

La présente invention vise aussi un programme informatique comportant des instructions pour la mise en œuvre du procédé ci-avant, lorsque ce programme est exécuté par un processeur. A titre d'exemple, on a représenté sur la figure 3 un ordinogramme d'un algorithme possible d'un tel programme.

La présente invention vise aussi un serveur de contrôle d'accès à un service en ligne, comportant un circuit informatique connecté à une base de données (référence MEM de la figure 2) répertoriant des groupes d'identifiants de dispositifs de transmission pour la mise œuvre du procédé ci-avant.

D'autres caractéristiques et avantages de l'invention apparaîtront à l'examen de la description détaillée ci-après, et des dessins annexés sur lesquels :
- la figure 1 illustre un exemple de réalisation d'un service fourni par un dispositif de transmission 14 ;
- la figure 2 illustre schématiquement un système comportant une pluralité de dispositifs de transmission pour la mise en œuvre de l'invention ;
- la figure 3 représente un exemple d'étapes mises en œuvre dans le cadre d'un procédé au sens de l'invention.
On se réfère maintenant la figure 2, sur laquelle une pluralité de dispositifs de transmission, d'identifiants respectifs ID1 à ID7 sont reliés à un serveur commun SERV, lequel comporte typiquement un circuit informatique incluant par exemple :
- une interface de communication COM, notamment avec les dispositifs de transmission, reliée à
- un processeur PROC, coopérant avec
- une unité mémoire MEM capable de stocker des données temporaires, ainsi que des données permanentes telles que les instructions d'un programme informatique au sens de l'invention, ainsi que des données d'identifiants répertoriés par groupes distincts GP1, GP2, GP3 dans une base de données.

Ainsi, un terminal SM (d'identifiant ID-SM) peut être en communication avec un dispositif de transmission d'identifiant ID2 à un instant t1. Pendant l'établissement de la connexion avec le dispositif ID2, ce dernier transmet naturellement l'identifiant ID-SM au serveur SERV.

Le serveur SERV stocke cet identifiant ID-SM (typiquement parmi les données temporaires précitées) en association avec l'identifiant ID2. Ensuite, en cas de mobilité du terminal SM, de sorte qu'il reçoit à un instant ultérieur t2 le faisceau d'un autre dispositif de transmission d'identifiant ID3, le terminal SM tente de se connecter à ce dispositif ID3 (par exemple pour avoir une meilleure réception qu'avec le dispositif précédent ID2). À cet effet, le terminal SM transmet son identifiant au nouveau dispositif ID3, lequel transmet cet identifiant ID-SM au serveur SERV.

Le serveur reçoit donc une nouvelle demande d'association entre les identifiants ID-SM et ID3, et ce pour un terminal d'identifiant ID-SM déjà présent dans sa mémoire MEM. Le serveur SERV est donc en mesure de déterminer, pour ce terminal SM, si les deux identifiants de dispositifs ID2 et ID3 sont répertoriés dans un même groupe GP1 dans sa base de données.

Si tel est le cas, alors la demande de connexion du terminal au dispositif ID3 peut être acceptée. Sinon, elle est refusée.

Ainsi, un terminal peut être déplacé d'un groupe GP1, à un autre GP2, dans des zones géographiques distinctes, par exemple, si au moins un dispositif de transmission ID3 appartient à ces deux groupes à la fois, comme illustré dans l'exemple de la figure 2.

On se réfère maintenant la figure 3 sur laquelle on a détaillé les étapes de la situation de mobilité illustrée sur la figure 2, dans un exemple de réalisation. Lors d'une première étape S1, tant que la communication du terminal SM avec le dispositif de transmission d'identifiant ID2 est de qualité correcte par exemple, le terminal SM reste connecté à ce dispositif ID2 (flèche OK). En revanche, par exemple pour un rapport signal à bruit inférieur à un seuil (flèche KO en sortie de test S1), le terminal peut chercher à se connecter avec un nouveau dispositif voisin, par exemple d'identifiant ID3, à l'étape S2. Dans ce cas, à l'étape S3, le terminal communique au dispositif ID3 son identifiant ID-SM, lequel est relayé ensuite au serveur SERV.

À l'étape S4, le serveur SERV vérifie dans sa base de données et dans sa mémoire MEM s'il existe un identifiant (par exemple ID2) du même groupe GP1 que le nouveau dispositif d'identifiant ID3 et qui était précédemment en communication avec le terminal d'identifiant ID-SM.

Si tel n'est pas le cas (flèche KO en sortie du test S4), alors la requête d'accès au service du terminal SM via le dispositif ID3 est rejetée à l'étape S5. À l'étape S6, le terminal peut être notifié de ce rejet. Son utilisateur peut, à l'étape S7, tenter de se reconnecter à un autre dispositif (ou à ce même dispositif ID3 dans le cas d'une mise en œuvre d'une temporisation décrite ci-après en référence à l'étape S8).

Si l'identifiant du nouveau dispositif de transmission ID3 est bien identifié dans un même groupe GP1 que celui de l'ancien dispositif ID2 (flèche OK en sortie du test S4), il est appliqué, dans un exemple de réalisation, une routine dite de « temporisation » à l'étape S8 comme suit : le serveur détermine un écart temporel entre le moment où le terminal s'est connecté au dispositif précédent ID2 et sa tentative de connexion au nouveau dispositif ID3. Si cet écart temporel t est supérieur à un seuil « tempo » (flèche KO en sortie du test S8), alors cela signifie qu'il s'agit d'une nouvelle tentative de connexion, dans l'absolu, du terminal avec le dispositif ID3 et qu'il convient alors de vérifier à nouveau l'autorisation d'accès au service du terminal. Il ne s'agit pas alors d'un simple relais de transmission de données entre le dispositif ID2 et le dispositif ID3 : dans ce cas, la requête d'accès est rejetée (étape S5), et l'utilisateur du terminal SM doit alors se reconnecter à nouveau pour accéder au service (étape S7) en fournissant par exemple un code d'accès ou autre.

En revanche, si l'écart temporel précité est inférieur au seuil tempo (flèche OK en sortie du test S8), alors le dispositif ID3 reçoit à l'étape S9 une autorisation de connexion avec le terminal SM et la communication peut ainsi être poursuivie entre le dispositif ID3 et le terminal SM à l'étape S10.

Par exemple, la temporisation précitée peut être mise en œuvre par référence à une horloge que peut comporter le processeur PROC (en exécutant par exemple une routine de type « time in / time out »).

Bien entendu, la présente invention ne se limite pas aux formes de réalisation décrites ci-avant à titre d'exemple ; elle s'étend à d'autres variantes.

Concernant les identifiants de lampes précités, il peut être attribué à une lampe tout type d'identifiant, permettant notamment un pilotage fin des flux de données qui peuvent être marqués comme en provenance de cette lampe ou bien routés à destination de cette lampe.

L'identifiant de terminal précité peut en outre être un identifiant d'utilisateur (disposant de plusieurs terminaux typiquement). Il peut s'agir d'un identifiant de type IMSI (fourni au serveur après une procédure de déclaration). Ainsi, tant que ce terminal reste en regard de la même lampe, l'autorisation d'accès au service reste valable (une temporisation pouvant en outre être mise en œuvre pour limiter éventuellement l'accès dans le temps au service sans nouvelle identification).

Le serveur précité SERV peut par exemple être connecté à plusieurs équipements du type de l'ordinateur 11 de la figure 1, pour gérer différents groupes de dispositifs de transmission (reliés par exemple à des ordinateurs distincts, pour des services différents).

## Revendications

1. Procédé de contrôle d'accès à un service en ligne, l'accès au service étant sollicité, via un réseau de communication, par un terminal (SM) adapté pour recevoir des données diffusées par une pluralité de dispositifs de transmission de données par modulation de lumière produisant un faisceau lumineux,
dans lequel :
- chaque dispositif de transmission est **caractérisé par** un identifiant unique (ID1, ..., ID7),
- chaque dispositif de transmission appartient à un groupe de dispositifs (GP1, GP2, GP3), **caractérisé en ce que** le procédé comporte les étapes suivantes mises en œuvre par un serveur relié aux dispositifs de transmission :
- sur réception d'une requête issue du terminal pour accéder au service via un deuxième dispositif de transmission identifié par un deuxième identifiant (ID3), vérifier si une précédente requête d'accès pour ce même terminal a été acceptée pour un premier dispositif de transmission identifié par un premier identifiant (ID2), et
- quand les premier et deuxième identifiants correspondent à des dispositifs d'un même groupe (GP1), traiter la requête d'accès, ou déconnecter le terminal, en réponse à la requête d'accès, lorsque les premier et deuxième identifiants ne correspondent pas à des dispositifs d'un même groupe.

2. Procédé selon la revendication 1, **caractérisé en ce que** l'identifiant d'au moins un dispositif de transmission appartient à une pluralité de groupes à la fois.

3. Procédé selon la revendication 2, **caractérisé en ce que** chaque groupe est associé à une zone géographique prédéterminée, et un dispositif de transmission dont l'identifiant appartient à deux groupes à la fois est capable d'assurer au terminal une continuité d'accès au service entre deux zones géographiques pendant une mobilité du terminal entres ces deux zones géographiques.

4. Procédé selon l'une des revendications précédentes, **caractérisé en ce que** chaque requête d'accès d'un terminal comporte un identifiant de ce terminal et un identifiant du dispositif de transmission via lequel l'accès au service est requis par ce terminal.

5. Procédé selon l'une des revendications précédentes, **caractérisé en ce qu'**il comporte en outre la prise en compte d'un délai de temporisation, et
**en ce que** la requête d'accès est traitée quand les premier et deuxième identifiants correspondent à des dispositifs d'un même groupe, et si en outre ladite précédente requête d'accès a été acceptée pour le premier dispositif depuis un délai inférieur au délai de temporisation.

6. Procédé selon l'une des revendications précédentes, **caractérisé en ce que** la transmission des données vers le terminal au moins est protégée par chiffrement, et **en ce qu'**on affecte une clé de chiffrement commune à des dispositifs de transmission d'un même groupe.

7. Procédé selon l'une des revendications précédentes, **caractérisé en ce que** la lumière modulée est dans le spectre visible.

8. Programme informatique **caractérisé en ce qu'**il comporte des instructions pour la mise en œuvre, par un serveur, des étapes du procédé selon l'une des revendications 1 à 7, lorsque ce programme est exécuté par un processeur dudit serveur.

9. Serveur de contrôle d'accès à un service en ligne, **caractérisé en ce qu'**il comporte un circuit de traitement connecté à une base de données répertoriant des groupes d'identifiants de dispositifs de transmission, ledit serveur étant configuré pour mettre en œuvre les étapes du procédé selon l'une des revendications 1 à 7.

## Patentansprüche

1. Verfahren zur Steuerung des Zugangs zu einem Online-Dienst, wobei der Zugang zu dem Dienst über ein Kommunikationsnetz durch ein Endgerät (SM) angefordert wird, das dafür eingerichtet ist, Daten zu empfangen, die von mehreren Datenübertragungsvorrichtungen durch Lichtmodulation rundgesendet werden, die ein Lichtbündel erzeugt,
wobei:
- jede Übertragungsvorrichtung durch eine eindeutige Kennung (ID1, ..., ID7) gekennzeichnet ist,
- jede Übertragungsvorrichtung einer Gruppe von Vorrichtungen (GP1, GP2, GP3) angehört,
**dadurch gekennzeichnet, dass** das Verfahren die folgenden Schritte umfasst, die von einem Server ausgeführt werden, der mit den Übertragungsvorrichtungen verbunden ist:
- nach Empfang einer von dem Endgerät stammenden Anforderung zum Zugreifen auf den Dienst über eine zweite Übertragungsvorrichtung, die durch eine zweite Kennung (ID3) identifiziert ist, überprüfen, ob eine vorangegangene Zugangsanforderung durch dasselbe Endgerät für eine erste Übertragungsvorrichtung, die durch eine erste Kennung (ID2) identifiziert ist, angenommen worden ist, und
- wenn die erste und die zweite Kennung Vorrichtungen derselben Gruppe (GP1) entsprechen, die Zugangsanforderrung bearbeiten, oder das Endgerät in Reaktion auf die Zugangsanforderung trennen, wenn die erste und die zweite Kennung nicht Vorrichtungen derselben Gruppe entsprechen.

2. Verfahren nach Anspruch 1, **dadurch gekennzeichnet, dass** die Kennung wenigstens einer Übertragungsvorrichtung mehreren Gruppen gleichzeitig angehört.

3. Verfahren nach Anspruch 2, **dadurch gekennzeichnet, dass** jede Gruppe einem vorbestimmten geographischen Gebiet zugeordnet ist und eine Übertragungsvorrichtung, deren Kennung zwei Gruppen gleichzeitig angehört, in der Lage ist, für das Endgerät eine Kontinuität des Zugangs zu dem Dienst zwischen zwei geographischen Gebieten während einer Bewegung des Endgerätes zwischen diesen zwei geographischen Gebieten sicherzustellen.

4. Verfahren nach einem der vorhergehenden Ansprüche, **dadurch gekennzeichnet, dass** jede Zugangsanforderung eines Endgerätes eine Kennung dieses Endgerätes und eine Kennung der Übertragungsvorrichtung, über welche der Zugang zu dem Dienst von diesem Endgerät angefordert wird, umfasst.

5. Verfahren nach einem der vorhergehenden Ansprüche, **dadurch gekennzeichnet, dass** es außerdem die Berücksichtigung einer Verzögerungszeit umfasst, und
dadurch, dass die Zugangsanforderung bearbeitet wird, wenn die erste und die zweite Kennung Vorrichtungen derselben Gruppe entsprechen, und falls außerdem die vorangegangene Zugangsanforderung für die erste Vorrichtung nach einer Zeit angenommen worden ist, die kürzer als die Verzögerungszeit ist.

6. Verfahren nach einem der vorhergehenden Ansprüche, **dadurch gekennzeichnet, dass** die Übertragung der Daten wenigstens an das Endgerät durch Verschlüsselung geschützt ist, und dadurch, dass Übertragungsvorrichtungen derselben Gruppe ein gemeinsamer Verschlüsselungsschlüssel zugewiesen wird.

7. Verfahren nach einem der vorhergehenden Ansprüche, **dadurch gekennzeichnet, dass** das modulierte Licht im sichtbaren Spektrum liegt.

8. Computerprogramm, **dadurch gekennzeichnet, dass** es Anweisungen zur Durchführung, durch einen Server, der Schritte des Verfahrens nach einem der Ansprüche 1 bis 7, wenn dieses Programm von einem Prozessor des Servers ausgeführt wird, umfasst.

9. Server zur Steuerung des Zugangs zu einem Online-Dienst, **dadurch gekennzeichnet, dass** er eine Verarbeitungsschaltung aufweist, die mit einer Datenbank verbunden ist, in der Gruppen von Kennungen von Übertragungsvorrichtungen verzeichnet sind, wobei der Server dafür ausgelegt ist, die Schritte des Verfahrens nach einem der Ansprüche 1 bis 7 durchzuführen.

## Claims

1. Method for controlling access to an online service, access to the service being requested, via a communication network, by a terminal (SM) adapted to receive data broadcast by a plurality of data transmission devices through light modulation that produces a light beam,
wherein:
- each transmission device is **characterized by** a unique identifier (ID1, ..., ID7),
- each transmission device belongs to a group of devices (GP1, GP2, GP3),
**characterized in that** the method comprises the following steps, implemented by a server connected to the transmission devices:
- upon receiving a request from the terminal to access the service via a second transmission device identified by a second identifier (ID3), verifying whether a previous access request for this same terminal was accepted for a first transmission device identified by a first identifier (ID2), and
- when the first and second identifiers correspond to devices of one and the same group (GP1) processing the access request, or disconnecting the terminal in response to the access request when the first and second identifiers do not correspond to devices of one and the same group.

2. Method according to Claim 1, **characterized in that** the identifier of at least one transmission device belongs to a plurality of groups at the same time.

3. Method according to Claim 2, **characterized in that** each group is associated with a predetermined geographical area, and a transmission device whose identifier belongs to two groups at the same time is capable of providing the terminal with continuity of access to the service between two geographical areas during mobility of the terminal between these two geographical areas.

4. Method according to one of the preceding claims, **characterized in that** each access request from a terminal comprises an identifier of this terminal and an identifier of the transmission device via which access to the service is requested by this terminal.

5. Method according to one of the preceding claims, **characterized in that** it furthermore comprises taking into account a timeout period, and
**in that** the access request is processed when the first and second identifiers correspond to devices of one and the same group, and if said previous access request has furthermore been accepted for the first device for a period shorter than the timeout period.

6. Method according to one of the preceding claims, **characterized in that** the transmission of data to at least the terminal is protected through encryption, and **in that** a common encryption key is assigned to transmission devices of one and the same group.

7. Method according to one of the preceding claims, **characterized in that** the modulated light is in the visible spectrum.

8. Computer program, **characterized in that** it comprises instructions for a server to implement the steps of the method according to one of Claims 1 to 7 when this program is executed by a processor of said server.

9. Server for controlling access to an online service, **characterized in that** it comprises a processing circuit connected to a database storing groups of identifiers of transmission devices, said server being configured so as to implement the steps of the method according to one of Claims 1 to 7.
